(19)

**Europäisches Patentamt**
**European Patent Office**
**Office européen des brevets**

(11) **EP 4 769 250 A1**

(12) **EUROPEAN PATENT APPLICATION**

(43) Date of publication:
**01.07.2026 Bulletin 2026/27**

(21) Application number: **25215377.0**

(22) Date of filing: **12.11.2025**

(51) International Patent Classification (IPC):
**$G06N\ 20/00$** (2019.01)  **$G06N\ 10/60$** (2022.01)

(52) Cooperative Patent Classification (CPC):
**G06N 20/00; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.12.2024 JP 2024229805**

(71) Applicant: **FUJITSU LIMITED**
**Kawasaki-shi, Kanagawa 211-8588 (JP)**

(72) Inventor: **CHINZEI, Koki**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, CALCULATION METHOD, AND INFORMATION PROCESSING APPARATUS**

(57)    A processing unit acquires the data of first and second classical shadows corresponding to first and second quantum data represented by qubits, and geometric structure information indicating the geometric structure of a space including lattice points associated with the qubits. The first and second classical shadows include first and second data elements, respectively, corresponding to the qubits. The processing unit sets local subspaces each including a set of local lattice points in the space, based on the geometric structure information. The processing unit calculates, for each local subspace, a value of a first kernel function based on first and second data elements of the first and second classical shadows corresponding to the lattice points of that local subspace, and calculates a value of a second kernel function corresponding to the first and second classical shadows, based on the values of the first kernel function corresponding to the local subspaces.

FIG. 1

# EP 4 769 250 A1

## Description

FIELD

The embodiments discussed herein relate to a computer program, a calculation method, and an information processing apparatus.

BACKGROUND

Quantum computers are computing devices based on the principles of quantum mechanics. Using quantum superposition states, quantum computers are able to perform computation faster than classical computers for certain problems. Classical computers are also called von Neumann computers.

In machine learning, kernel methods are known as techniques for solving nonlinear problems. For example, in the case of solving a nonlinear problem, data is mapped to a high-dimensional feature space and a linear problem is solved in the feature space, thereby solving the nonlinear problem in the original space. By contrast, kernel methods are able to perform computation using kernel functions, without actually mapping data to a high-dimensional space. Kernel functions are functions that represent the degree of similarity between data.

Quantum kernel methods are known as one approach to quantum machine learning using a quantum computer. A quantum kernel method is a kernel method that is implemented on a quantum computer, and makes it possible to solve a complex problem by mapping data to a quantum feature space. In general, it is not possible to efficiently simulate the quantum feature space on classical computers. Therefore, quantum kernel methods are expected to have a quantum advantage, and exhibit exponential acceleration of computation for artificial problems. However, such quantum kernel methods are not yet practical due to the vanishing similarity issue, which is a problem that values of a kernel function concentrate to a certain point.

As types of quantum kernel methods, a projected kernel method and a shadow kernel method have been proposed. The projected kernel method is a technique in which reduced density matrices (quantum states reduced to subsystems) of quantum data are obtained on a quantum computer, and the kernels between the reduced density matrices are computed on a classical computer. The shadow kernel method is a technique in which classical shadows, which are classical approximations of a quantum state, are obtained on a quantum computer, and the kernels between the classical shadows are calculated on a classical computer.

For example, a method has been proposed for computing, using a quantum computing device, a value of a kernel function for each pair of quantum data points in a training dataset, the kernel function being based on reduced density matrices for the quantum data points. See, for example, the following literatures.

U.S. Patent Application Publication No. 2024/0046137
U.S. Patent Application Publication No. 2023/0385674
International Publication Pamphlet No. WO 2023/278462
International Publication Pamphlet No. WO 2022/086918
Maria Schuld and one other, "Quantum Machine Learning in Feature Hilbert Spaces," Physical Review Letters. 122,040504, February 1, 2019
Yunchao Liu and 2 others, "A rigorous and robust quantum speed-up in supervised machine learning," Nature Physics 17,1013-1017 (2021), July 12, 2021
Hsin-Yuan Huang and 6 others, "Power of data in quantum machine learning," Nature Communications 12, Article number: 2631 (2021), May 11, 2021
Hsin-Yuan Huang and 4 others, "Provably efficient machine learning for quantum many-body problems," Science vol. 377, Issue 6613, September 23, 2022

In existing kernel calculation methods such as the above-described shadow kernel method, the dimensionality of the feature space becomes exceedingly large as the number of qubits increases. In general, the generalization of a trained model needs approximately as many pieces of training data as there are features. Thus, as the number of qubits increases, the number of pieces of training data needed for the generalization also increases. However, quantum computers in the near future will have insufficient computational resources, and may be unable to generate a large amount of quantum data. As a result, it may be difficult to prepare a sufficient number of pieces of training data.

SUMMARY

In one aspect, the present disclosure is intended to reduce the number of pieces of training data to be used in machine learning.

In one aspect, there is provided a computer program that causes a computer to perform a process including: acquiring data of a first classical shadow corresponding to first quantum data represented by a plurality of qubits, data of a second classical shadow corresponding to second quantum data represented by the plurality of qubits, and geometric structure information indicating a geometric structure of a space including a plurality of lattice points associated with the plurality of qubits, the first classical shadow including a plurality of first data elements corresponding to the plurality of quits, the second classical shadow including a plurality of second data elements corresponding to the plurality of qubits; setting, based on the geometric structure information, a plurality of local subspaces each including a set of at least one local lattice point among the plurality of lattice points in the space; calculating, for each of the plurality of local subspaces, a value of a first kernel function based on, among the plurality of first data elements and the plurality of second data elements, a first data element and a second data element corresponding to the at least one lattice point belonging to said each of the plurality of local subspaces; and calculating a value of a second kernel function corresponding to the first classical shadow and the second classical shadow, based on a plurality of values of the first kernel function corresponding to the plurality of local subspaces.

BRIEF DESCRIPTION OF DRAWINGS

FIG. 1 is a diagram for describing an information processing apparatus according to a first embodiment;
FIG. 2 is a flowchart illustrating an example a process performed by the information processing apparatus;
FIG. 3 illustrates an example of a quantum computing system according to a second embodiment;
FIG. 4 illustrates an example of hardware of the quantum computing system;
FIG. 5 illustrates an example of mapping data to a high-dimensional feature space;
FIG. 6 illustrates an example of functions of a classical computer;
FIGS. 7A to 7C illustrate examples of geometric structures of space;
FIG. 8 illustrates an example of a quantum circuit used to acquire a classical shadow;
FIG. 9 illustrates examples of local subspaces;
FIG. 10 is a diagram for describing a geometrically local shadow kernel;
FIG. 11 illustrates an example of adaptive selection for a local subspace;
FIG. 12 is a flowchart illustrating an example of a training process;
FIG. 13 is a flowchart illustrating an example of an inference process;
FIG. 14 is a diagram for describing a geometric structure used in an experiment;
FIG. 15 illustrates examples of local subspaces;
FIG. 16 is a diagram for describing a support vector machine;
FIGS. 17A and 17B illustrate example results of prediction accuracy;
FIG. 18 illustrates an example of demonstration results of an adaptive algorithm; and
FIG. 19 illustrates an example of demonstration results of the adaptive algorithm.

DESCRIPTION OF EMBODIMENTS

Hereinafter, embodiments will be described with reference to the drawings.

[First Embodiment]

A first embodiment will be described.

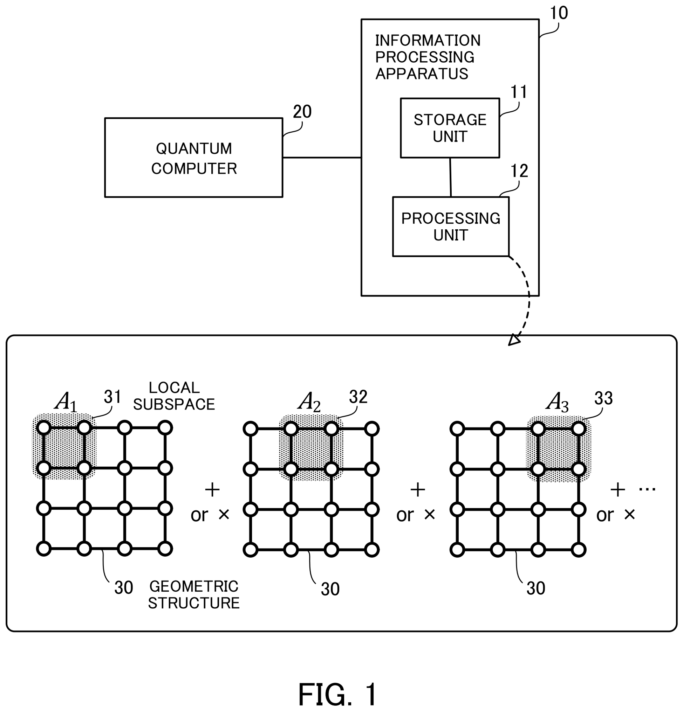

FIG. 1 is a diagram for describing an information processing apparatus according to the first embodiment. The information processing apparatus 10 is used for machine learning based on quantum data. The quantum data is data represented by a plurality of qubits. The information processing apparatus 10 is connected to a quantum computer 20. The quantum computer 20 performs quantum operations based on quantum circuits. The quantum computer 20 performs the quantum operations on qubits.
The information processing apparatus 10 includes a storage unit 11 and a processing unit 12. The storage unit 11 may be a volatile semiconductor memory such as random access memory (RAM), or a nonvolatile storage such as hard disk drive (HDD) or flash memory. The processing unit 12 is, for example, a processor such as a central processing unit (CPU), a graphics processing unit (GPU), or a digital signal processor (DSP). However, the processing unit 12 may include an electronic circuit for a specific application such as an application specific integrated circuit (ASIC) or a field programmable gate array (FPGA). A processor executes programs stored in a memory such as a RAM (which may be the storage unit 11). A set of a plurality of processors may be called a "multiprocessor" or simply a "processor".
Here, as types of quantum kernel methods, methods such as a shadow kernel method and a projected kernel method are known. For example, the shadow kernel method is a technique in which classical shadows of quantum data are obtained on the quantum computer 20, and then values of a kernel function between the classical shadows are calculated on a classical computer. A classical shadow is data that is a combination of a measurement result of a quantum state $\rho$ in a random basis and the basis. By using classical shadows, it becomes possible to efficiently approximate specific properties of the quantum state.

The kernel function used in the shadow kernel method is referred to as a shadow kernel. The shadow kernel $k^{(shadow)}$ is expressed by Formula (1) .

$$
\begin{aligned}
&k^{(shadow)}\left(S_T(\rho), S_T(\tilde{\rho})\right) \\
&= \exp\left(\frac{\tau}{T^2} \sum_{t,t'=1}^{T} \exp\left(\frac{\gamma}{n} \sum_{i=1}^{n} \mathrm{tr}\left(\sigma_i^{(t)} \tilde{\sigma}_i^{(t')}\right)\right)\right)
\end{aligned}
\tag{1}
$$

$S_T(\rho)$ and $S_T(\tilde{\rho})$ are classical shadows corresponding to quantum data $\rho$ and $\tilde{\rho}$, respectively. $S_T(\rho) = \{\sigma_i^{(t)}\}$. $S_T(\tilde{\rho}) = \{\tilde{\sigma}_i^{(t)}\}$. n denotes the number of qubits contained in the quantum data. A record $\{\sigma_i^{(1)}, \sigma_i^{(2)}, ..., \sigma_i^{(T)}\}$ is a data element of the classical shadow corresponding to the i-th qubit of the quantum data $\rho$. T denotes the maximum number of times for measuring the qubits. Each of $\sigma_i^{(1)}, \sigma_i^{(2)}, ..., \sigma_i^{(T)}$ is a matrix with two rows and two columns. $\tau$ and $\gamma$ are real-valued hyperparameters.

Here, the information processing apparatus 10 is able to obtain a classical shadow for the quantum data $\rho$ by performing a random Pauli measurement of the quantum data $\rho$ using the quantum computer 20. Specifically, the process is as follows.

First, the quantum computer 20 prepares the quantum data $\rho$ on the quantum computer 20. Next, the quantum computer 20 measures each qubit of $\rho$ in a randomly selected basis from X, Y, and Z. More specifically, the quantum computer 20 applies a quantum gate randomly selected from {I, H, HS$^\dagger$} to each qubit of $\rho$. I denotes an identity gate. H denotes a Hadamard gate. S denotes a phase gate. Here, the quantum gate applied to the i-th qubit is denoted $U_i$. The quantum computer 20 then measures all qubits in the Z basis. The state of the i-th qubit projected thereby is denoted as $|b_i\rangle$. Then, $\sigma_i$ is expressed by Formula (2).

$$
\sigma_i = 3U_i^\dagger |b_i\rangle \langle b_i| U_i - I
\tag{2}
$$

In Formula (2), I denotes an identity matrix with 2 rows and 2 columns. The quantum computer 20 repeats the above operation on $\rho$ T times. $\sigma_i$ obtained at the t-th measurement is denoted by $\sigma_i^{(t)}$.

The feature space of a shadow kernel includes reduced density matrices of arbitrary order for arbitrary subspaces. Therefore, it is possible to learn nonlinear properties of a quantum state. Further, in the shadow kernel method, information is first reduced to classical approximations, and then the shadow kernel is calculated. Therefore, the vanishing similarity issue may be avoided in some cases.

However, in existing techniques such as the shadow kernel method and the projected kernel method, the dimensionality of the feature space restricted to a finite subsystem size and order becomes exceedingly large as the number of qubits increases. Therefore, the number of pieces of training data needed for generalization increases with the number of qubits. To address this, the information processing apparatus 10 calculates the kernel function as follows.

The processing unit 12 acquires the data of a first classical shadow corresponding to first quantum data represented by a plurality of qubits and the data of a second classical shadow corresponding to second quantum data represented by the plurality of qubits. As described above, the processing unit 12 is able to acquire the data of the first classical shadow and the data of the second classical shadow using the quantum computer 20. The first classical shadow includes a plurality of first data elements corresponding to the plurality of qubits. For example, the first data element corresponding to the i-th qubit is $\{\sigma_i^{(1)}, \sigma_i^{(2)}, ..., \sigma_i^{(T)}\}$. The second classical shadow includes a plurality of second data elements corresponding to the plurality of qubits. For example, the second data element corresponding to the i-th qubit is $\tilde{\sigma}_i^{(1)}, \tilde{\sigma}_i^{(2)} ..., \tilde{\sigma}_i^{(T)}\}$ .

The processing unit 12 further acquires geometric structure information indicating the geometric structure of a space including a plurality of lattice points associated with the plurality of qubits. The processing unit 12 stores the data of the first classical shadow, the data of the second classical shadow, and the geometric structure information in the storage unit 11. The storage unit 11 stores the data of the first classical shadow, the data of the second classical shadow, and the geometric structure information.

Here, examples of the geometric structure of a space include a one-dimensional chain, a two-dimensional square lattice, and a three-dimensional cubic lattice, which represent the spatial arrangement of constituent particles such as atoms and molecules in a molecule or a solid. A one-dimensional chain is also regarded as a one-dimensional lattice. The geometric structure in a substance significantly affects the properties of the substance. Therefore, by incorporating information on a geometric structure into a model, the training accuracy is expected to be improved. In particular, in many substances, the correlation function decays exponentially as the distance between lattice points in a space increases. To address this, by focusing on local subsystems in the space, it becomes possible to efficiently learn the properties of the substance.

Note now that, in addition to the above example, the functions of the information processing apparatus 10 are applicable to local pattern recognition and local error detection in, for example, images, videos, and quantum data output from the quantum computer 20.

In one example, a geometric structure 30 is a two-dimensional square lattice. In this case, a plurality of lattice points in the two-dimensional square lattice are previously associated with the plurality of qubits in a one-to-one manner. The lattice points correspond to points associated with the qubits.

The processing unit 12 sets a plurality of local subspaces each including a set of local lattice points in the space, based on the geometric structure information. A set $A_{GL}$ of the local subspaces is defined by Formula (3).

$$\mathcal{A}_{GL} = \{A_1, A_2, \cdots\} \tag{3}$$

Local subspaces 31, 32, 33, ... are examples of local subspaces identified by identifiers $A_1$, $A_2$, $A_3$, .... For example, each of the local subspaces 31, 32, 33, ... is a square region including two lattice points on each side. In this case, one local subspace has four lattice points. For example, the processing unit 12 is able to define the local subspaces 31, 32, 33, ... by shifting the square region, one lattice point at a time, along a side of the geometric structure 30. The union of the local subspaces 31, 32, 33, **...** corresponds to the entire space of the geometric structure 30. In this connection, the local subspaces may be referred to as "local subsystems".

The shape of the local subspace may be, depending on the dimension of a space represented by the geometric structure information, the shape of a region including only one lattice point, the shape of a linear region including only one side, or the shape of a lattice represented by the geometric structure information, such as a square, a rectangle, a cube, and a cuboid.

Among the plurality of first data elements included in the first classical shadow and the plurality of second data elements included in the second classical shadow, the processing unit 12 identifies the first data elements and the second data elements corresponding to the lattice points belonging to a local subspace. "The first data elements and the second data elements corresponding to the lattice points belonging to a local subspace" may also be regarded as "the first data elements and the second data elements corresponding to the qubits associated with the lattice points belonging to a local subspace." The processing unit 12 calculates, for each of the plurality of local subspaces, a value of a first kernel function based on the first data elements and the second data elements identified for that local subspace.

For example, with respect to the local subspace 31, the processing unit 12 obtains four lattice points belonging to the local subspace 31. These four lattice points are identified by the indices a, b, c, and d of qubits. In this case, the first data elements corresponding to the lattice points belonging to the local subspace 31 are $\{\sigma_a^{(t)}\}$, $\{\sigma_b^{(t)}\}$, $\{\sigma_c^{(t)}\}$, and $\{\sigma_d^{(t)}\}$. The second data elements corresponding to the lattice points belonging to the local subspace 31 are $\{\tilde{\sigma}_a^{(t)}\}$, $\{\tilde{\sigma}_b^{(t)}\}$, $\{\tilde{\sigma}_c^{(t)}\}$, and $\{\tilde{\sigma}_d^{(t)}\}$. Here, for example, the notation $\{\sigma_a^{(t)}\}$ indicates $\{\sigma_a^{(1)}, \sigma_a^{(2)}, ..., \sigma_a^{(T)}\}$.

Then, with respect to the local subspace 31, the processing unit 12 calculates a value of the first kernel function based on $\{\sigma_a^{(t)}\}$, $\{\sigma_b^{(t)}\}$, $\{\sigma_c^{(t)}\}$, $\{\sigma_d^{(t)}\}$, $\{\tilde{\sigma}_a^{(t)}\}$, $\{\tilde{\sigma}_b^{(t)}\}$, $\{\tilde{\sigma}_c^{(t)}\}$, $\{\tilde{\sigma}_d^{(t)}\}$, for example. The first kernel function is, for example, a shadow kernel. The processing unit 12 also calculates values of the first kernel function with respect to the local subspaces 32, 33, ..., in the same manner as for the local subspace 31.

The processing unit 12 then calculates a value of a second kernel function corresponding to the first classical shadow and the second classical shadow, based on the plurality of values of the first kernel function corresponding to the plurality of local subspaces.

For example, in the case where a shadow kernel is used as the first kernel function, the second kernel function is referred to as a geometrically local shadow kernel (GLSK) and is denoted as $k_{GLSK}$. $k_{GLSK}$ is defined as either the sum or the product of shadow kernels calculated for the respective local subspaces. The GLSK defined as the sum is expressed by Formula (4).

$$k_{GLSK}\left(S_T(\rho), S_T(\tilde{\rho})\right)$$

$$= \sum_{A \in \mathcal{A}_{GL}} c_A \exp\left(\frac{\tau_A}{T^2} \sum_{t,t'=1}^{T} \exp\left(\frac{\gamma_A}{|A|} \sum_{i \in A} \mathrm{tr}\left(\sigma_i^{(t)} \tilde{\sigma}_i^{(t')}\right)\right)\right) \tag{4}$$

|A| denotes the number of qubits included in a local subspace A. $\tau_A$ is a hyperparameter for adjusting the degree of contribution of the order of the reduced density matrix in each local subspace. $\gamma_A$ is a hyperparameter for adjusting the degree of contribution of the spatial spread in each local subspace. $C_A$ is a hyperparameter for adjusting the degree of contribution of each local subspace.

The GLSK defined as the product is expressed by Formula (5).

$$k_{GLSK}\left(S_T(\rho), S_T(\tilde{\rho})\right)$$

$$= \prod_{A \in \mathcal{A}_{GL}} \exp\left(\frac{\tau_A}{|\mathcal{A}_{GL}|T^2} \sum_{t,t'=1}^{T} \exp\left(\frac{\gamma_A}{|A|} \sum_{i \in A} \mathrm{tr}\left(\sigma_i^{(t)} \tilde{\sigma}_i^{(t')}\right)\right)\right) \quad (5)$$

$|A_{GL}|$ denotes the total number of local subspaces $A_1$, $A_2$, ... included in the set $A_{GL}$ of local subspaces. In the GLSK defined as the product, $1/|A_{GL}|$ is added for normalization.

In this connection, in $\Sigma C_A \exp(...)$ of Formula (4), the part $\exp(...)$ after $\Sigma C_A$ corresponds to the first kernel function for the local subspace A, and is a shadow kernel in the example of Formula (4). In $\Pi \exp(...)$ of Formula (5), the part $\exp(...)$ after $\Pi$ corresponds to the first kernel function for the local subspace A, and is a shadow kernel in the example of Formula (5).

The first kernel function defined for the local subspace A is not limited to a shadow kernel, but may be a fidelity kernel or a projected kernel. A fidelity kernel of quantum states $\rho$ and $\tilde{\rho}$ is defined as their inner product $\mathrm{tr}(\rho\tilde{\rho})$. For the projected kernel, reference may be made to the above-mentioned literatures "Power of data in quantum machine learning" and International Publication Pamphlet No. WO 2022/086918.

The processing unit 12 acquires the data of a plurality of classical shadows for a plurality of quantum data included in a training dataset, and calculates a GLSK value for each pair of classical shadows. The processing unit 12 is able to create a model that outputs a predicted value such as a class classification result for a classical shadow, by machine learning based on the GLSK values calculated for the respective pairs of classical shadows. For the machine learning, a machine learning algorithm based on a kernel method such as a support vector machine is used. The model is sometimes referred to as a trained model, an artificial intelligence (AI) model, a machine learning model, a prediction model, or another.

In the "GLSK defined as the sum", the feature vector determined by the kernel function includes "the sum of polynomials in the reduced density matrices $\rho_A$ for each local subspace A" as expressed by Formula (6).

$$\sum_{A \in \mathcal{A}_{GL}} \left(\text{polynomial of } \rho_A\right) \quad (6)$$

In the "GLSK defined as the product", the feature vector determined by the kernel function includes "polynomials in the reduced density matrices $\rho_{A\_1}$, $\rho_{A\_2}$,... for all local subspaces $A_1$, $A_2$, ..." as expressed by Formula (7). Here, "A_1" denotes $A_1$.

$$\text{polynomial of } \rho_{A_1}, \rho_{A_2}, \cdots \quad (7)$$

Therefore, the expressiveness of the feature vector is such that "GLSK defined as the sum < GLSK defined as the product". For example, if it is known in advance that a feature to be learned is able to be expressed by Formula (6), "GLSK defined as the sum" may be used, and if it is not known, "GLSK defined as the product" may be used. If a problem is able to be solved by "GLSK defined as the sum", then using the "GLSK defined as the sum" needs less training data than using the "GLSK defined as the product".

Further, in some cases, it is not known in advance how to define a set of local subspaces. In such cases, the processing unit 12 may execute an adaptive algorithm that adaptively changes the size and shape of the local subspace so as to reduce a training error or validation error of a trained model obtained for the local subspace having a certain size and shape. By using classical shadows, the processing unit 12 is able to perform computation for an arbitrary local subspace. Therefore, the adaptive algorithm does not increase the quantum computational cost in the quantum computer 20.

An example of the adaptive algorithm may be an algorithm in which, "at the initial stage, the size of the local subspace is set relatively small, and if a validation error exceeds a certain threshold, the size of the local subspace is increased". For example, the size of the local subspaces 31, 32, 33, ... may be determined using the number of lattice points included in each side. In this case, the minimum number of lattice points included in each side is one. In changing the size, the processing unit 12 may increase the number of lattice points included in both the vertical and horizontal sides, or may increase the number of lattice points included in either one of the vertical and horizontal sides. For example, it is considered that, if it is known that the correlation in a specific direction in a geometric structure is relatively strong, the local subspace is expanded only in the specific direction. Alternatively, in changing the size of the local subspace, the processing unit 12 may adaptively change the shape of the local subspace such that, if an expansion only in a specific direction does not sufficiently improve the prediction accuracy of a trained model, the local subspace is expanded in another direction.

Next, a processing procedure of the information processing apparatus 10 will be described.

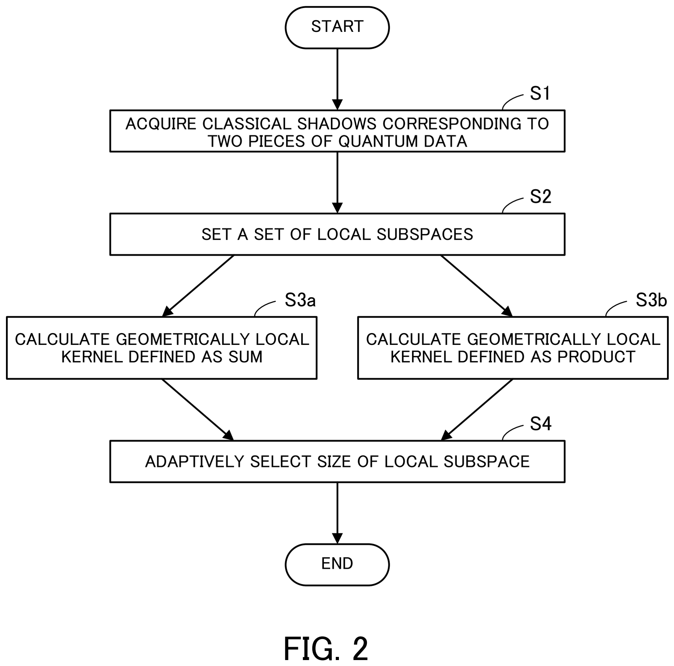

FIG. 2 is a flowchart illustrating an example of a process performed by the information processing apparatus.

(S1) The processing unit 12 acquires classical shadows corresponding to two pieces of quantum data using the quantum computer 20. Here, during machine learning, the processing unit 12 acquires a classical shadow for each of a plurality of pieces of quantum data given as a training dataset.

(S2) The processing unit 12 sets a set $A_{GL}$ of local subspaces A. At the initial stage, the processing unit 12 sets the size of the local subspace relatively small. For example, at the initial stage, the processing unit 12 may set the size of the local subspace to the minimum. Then, the process proceeds to step S3a or step S3b. For example, which of steps S3a and S3b is to be used is predetermined according to the problem.

(S3a) The processing unit 12 calculates a geometrically local kernel defined as the sum. The geometrically local kernel corresponds to the second kernel function. The GLSK is an example of geometrically local kernels. For example, the GLSK defined as the sum is expressed by Formula (4). The processing unit 12 calculates the geometrically local kernel for each pair of classical shadows among the plurality of classical shadows used as the training data. Then, the process proceeds to step S4.

(S3b) The processing unit 12 calculates a geometrically local kernel defined as the product. For example, the GLSK defined as the product is expressed by Formula (5). The processing unit 12 calculates the geometrically local kernel for each pair of classical shadows among the plurality of classical shadows used as the training data. Then, the process proceeds to step S4.

(S4) The processing unit 12 adaptively selects the size of the local subspace. Specifically, the processing unit 12 creates a trained model that outputs a predicted value in response to an input of a

classical shadow, by machine learning using the calculated values of the geometrically local kernel and the training data. The processing unit 12 changes the size of the local subspace based on the accuracy of predicted values obtained by the trained model. For evaluating the accuracy of the predicted values, for example, a training error based on the training data or a validation error based on a plurality of classical shadows prepared as validation data may be used. In one example, if the training error or the validation error exceeds a certain threshold, the processing unit 12 increases the size of the local subspace.

Then, the processing unit 12 iteratively executes step S2 and step S3a or S3b, creates a trained model, evaluates the accuracy of predicted values obtained by the trained model, and changes the size of the local subspace until the training error or the validation error becomes less than or equal to the threshold. When the training error or the validation error becomes less than or equal to the threshold, the process is completed.

Note that, due to the possibility of overfitting, it is not necessarily possible to correctly evaluate the accuracy using the training data. To address this, in the adaptive algorithm of step S4, it is preferable to use the validation error based on the validation data, rather than the training error.

Further, in the execution of steps S3a and S3b, the processing unit 12 may first execute step S3a, and if the prediction accuracy of the trained model, which is created based on the kernel defined as the sum, does not reach a criterion, then may execute step S3b to improve the prediction accuracy by employing the kernel defined as the product.

The processing unit 12 stores information on the finally obtained trained model in the storage unit 11. Then, the processing unit 12 is able to obtain a predicted value for new quantum data using the trained model. Even in inference using the trained model, the processing unit 12 is able to set a local subspace of a size determined during training and to calculate geometrically local kernels such as GLSK.

According to the information processing apparatus 10 of the first embodiment, the data of a first classical shadow corresponding to first quantum data represented by a plurality of qubits and the data of a second classical shadow corresponding to second quantum data represented by the plurality of qubits are acquired, the first classical shadow including a plurality of first data elements corresponding to the plurality of qubits, the second classical shadow including a plurality of second data elements corresponding to the plurality of qubits. Geometric structure information indicating the geometric structure of a space including a plurality of lattice points associated with the plurality of qubits is also acquired. On the basis of the geometric structure information, a plurality of local subspaces each including a set of local lattice points in the space are set. A value of a first kernel function is calculated for each of the plurality of local subspaces, based on, among the plurality of first data elements and the plurality of second data elements, the first data elements and the second data elements corresponding to the lattice points belonging to that local subspace. On the basis of the plurality of values of the first kernel function corresponding to the plurality of local subspaces, a value of a second kernel function corresponding to the first classical shadow and the second classical shadow is calculated.

With the above approach, the information processing apparatus 10 is able to reduce the number of pieces of training data to be used for the machine learning. As described earlier, for example, the geometric structure of a space significantly affects the properties of a substance. In many substances, the correlation function between lattice points decays exponentially as the distance between the lattice points increases. To address this, by focusing on local subsystems in a space, namely, local subspaces, it becomes possible to efficiently learn the properties of a substance. Therefore, by incorporating information on a geometric structure into a trained model, it becomes possible to improve the training accuracy with less training data than the case where the geometric structure is not taken into account.

Note that, in addition to the case of substances, the functions of the information processing apparatus 10 are applicable to local pattern recognition and local error detection of, for example, images, videos, and quantum data output from a quantum computer. In these applications as well, the information processing apparatus 10 is able to reduce the number of pieces of training data to be used for machine learning.

[Second Embodiment]

Next, a second embodiment will be described.

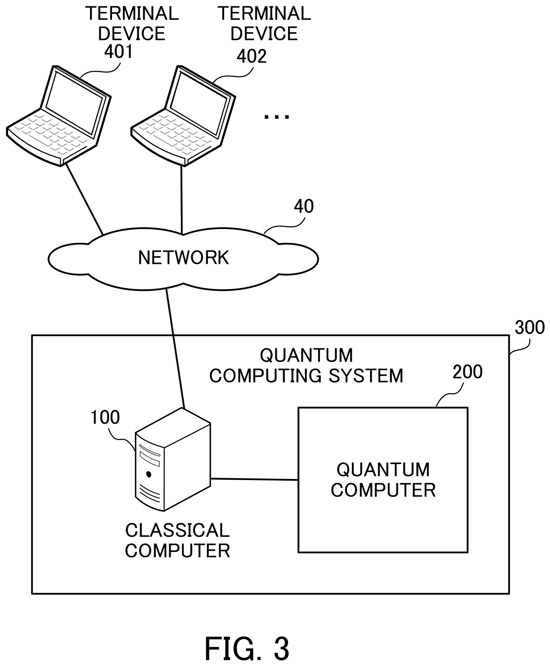

FIG. 3 illustrates an example of a quantum computing system according to the second embodiment. The quantum computing system 300 is a computer system that uses a quantum device. The quantum computing system 300 includes a classical computer 100 and a quantum computer 200. Terminal devices 401, 402, ... are connected to the classical computer 100 via a network 40. The terminal devices 401, 402, ... are computers that are operated by users who use the quantum computing system 300. The classical computer 100 receives computing requests including quantum circuits from the terminal devices 401, 402, .... A quantum circuit represents the order of operations to be applied to qubits by the arrangement of elements such as quantum gates. A qubit is a bit capable of representing a superposition state of a "0" state and a "1" state.

The classical computer 100 instructs the quantum computer 200 to perform quantum computations in accordance with the quantum circuits received from the terminal devices 401, 402, .... The classical computer 100 acquires the measurement results of qubits from the quantum computer 200. The classical computer 100 is an example of the information processing apparatus 10.

The quantum computer 200 includes a plurality of qubits and an apparatus for operating each of the plurality of qubits. The plurality of qubits in the quantum computer 200 are, for example, superconducting qubits, trapped-ion qubits, diamond spin qubits, or others. The quantum computing system 300 may include a plurality of quantum computers including the quantum computer 200.

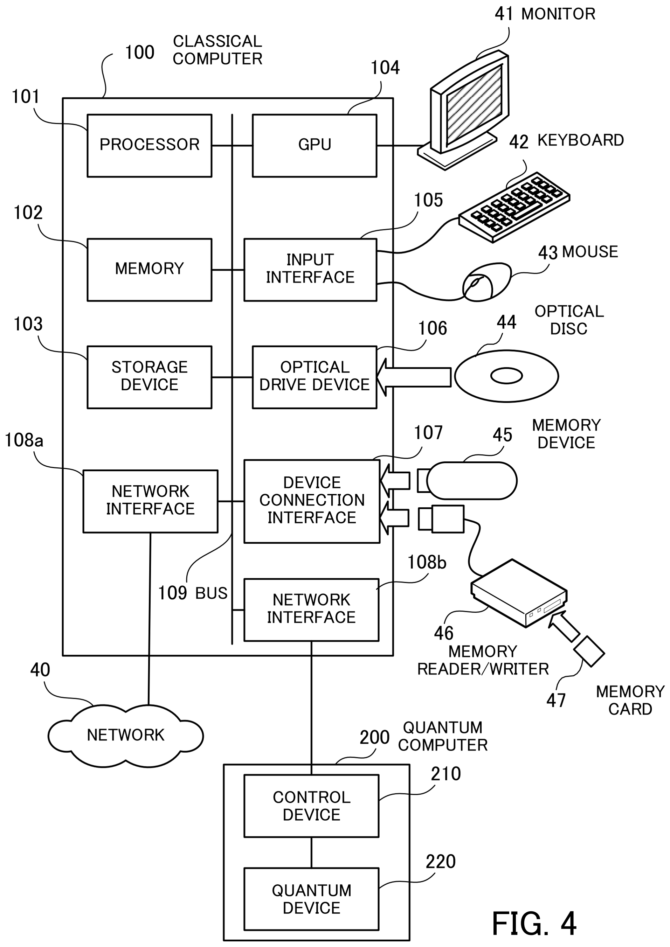

FIG. 4 illustrates an example of hardware of the quantum computing system. The classical computer 100 is entirely controlled by a processor 101. A memory 102 and a plurality of peripheral devices are connected to the processor 101 via a bus 109. The processor 101 may be a multiprocessor. The processor 101 may be, for example, a CPU, a micro processing unit (MPU), or a DSP. At least a part of the functions implemented by the processor 101 executing a program may be implemented by an electronic circuit such as an ASIC or a programmable logic device (PLD). Among a plurality of processes performed by the classical computer 100, a certain process and another process may be performed by different processors. Some or all of the processes described below may be performed in parallel by using a plurality of processors or processor cores. The processor 101 may be referred to as "processor circuitry". The processor 101 is an example of the processing unit 12 of the first embodiment.

The memory 102 is used as a main storage device of the classical computer 100. The memory 102 temporarily stores at least a part of an operating system (OS) program and an application program to be executed by the processor 101. The memory 102 also stores various data to be used by the processor 101 during its processing. A volatile semiconductor storage device such as RAM is used as the memory 102.

The peripheral devices connected to the bus 109 include a storage device 103, a GPU 104, an input interface 105, an optical drive device 106, a device connection interface 107, and network interfaces 108a and 108b.

The storage device 103 electrically or magnetically writes data to and reads data from a built-in recording medium. The storage device 103 is used as an auxiliary storage device of the classical computer 100. The storage device 103 stores an OS program, an application program, and various data. The storage device 103 may be, for example, an HDD or a solid state drive (SSD). The memory 102 or the storage device 103 is an example of the storage unit 11 in the first embodiment.

The GPU 104 is an arithmetic unit that performs image processing. The GPU 104 is an example of a graphic controller. A monitor 41 is connected to the GPU 104. The GPU 104 displays images on the screen of the monitor 41 in accordance with instructions from the processor 101. The monitor 41 may be a display device using an organic electro luminescence (EL), a liquid crystal display device, or another.

A keyboard 42 and a mouse 43 are connected to the input interface 105. The input interface 105 transmits signals received from the keyboard 42 and the mouse 43 to the processor 101. The mouse 43 is an example of a pointing device, and other pointing devices may be used. Other pointing devices include a touch panel, a tablet, a touch pad, and a trackball.

The optical drive device 106 reads data recorded on an optical disc 44 or writes data to the optical disc 44 by using laser light or the like. The optical disc 44 is a portable recording medium on which data is recorded so as to be readable by reflection of light. The optical disc 44 may be a digital versatile disc (DVD), a DVD-RAM, a compact disc read only memory (CD-ROM), a CD-recordable (CD-R), a CD-rewritable (CD-RW), or another.

The device connection interface 107 is a communication interface for connecting peripheral devices to the classical computer 100. For example, a memory device 45 and a memory reader/writer 46 may be connected to the device connection interface 107. The memory device 45 is a recording medium having a function for communication with the device connection interface 107. The memory reader/writer 46 is a device for writing data to a memory card 47 or reading data from the memory card 47. The memory card 47 is a card type recording medium.

The network interface 108a is connected to the network 40. The network interface 108a transmits data to and receives data from other computers and communication devices via the network 40. The network interface 108a is, for example, a wired communication interface connected to a wired communication device such as a switch or a router via a cable. Alternatively, the network interface 108a may be a wireless communication interface connected to a wireless communication device such as a base station or an access point by radio waves.

The network interface 108b is an interface for connection to the quantum computer 200. The processor 101 transmits a quantum circuit to the quantum computer 200 via the network interface 108b and causes the quantum computer 200 to perform the quantum computation. The processor 101 acquires the result of the quantum computation via the network interface 108b.

The classical computer 100 is able to implement the processing functions of the second embodiment with the hardware described above. The apparatus described in the first embodiment is also implemented with the same hardware as the classical computer 100 illustrated in FIG. 4.

The classical computer 100 implements the processing functions of the second embodiment by, for example, executing a program recorded on a computer-readable recording medium. The program describing the processing contents to be executed by the classical computer 100 may be recorded on various recording media. For example, a program to be executed by the classical computer 100 may be stored in the storage device 103. The processor 101 loads at least a part of the program from the storage device 103 into the memory 102 and executes the program. The program to be executed by the classical computer 100 may be recorded on a portable recording medium such as the optical disc 44, the memory device 45, or the memory card 47. The program stored on the portable recording medium becomes executable after being installed in the storage device 103 under the control of the processor 101, for example. Alternatively, the processor 101 may directly read the program from the portable recording medium and execute the program.

The quantum computer 200 includes a control device 210 and a quantum device 220. The control device 210 performs gate operations on qubits in the quantum device in accordance with a quantum circuit. The quantum device 220 includes a plurality of qubits. The quantum device 220 is, for example, one quantum processing unit (QPU) or a plurality of QPUs.

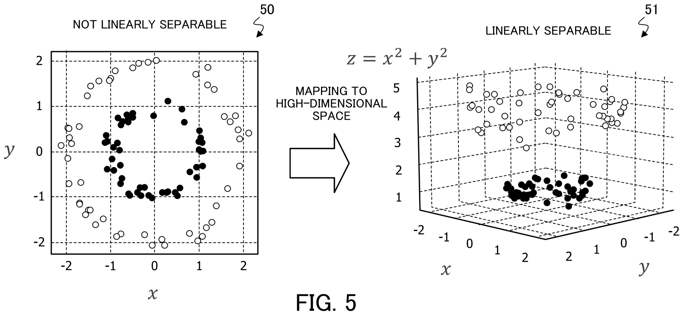

FIG. 5 illustrates an example of mapping data to a high-dimensional feature space. In the case of solving a nonlinear problem by a machine learning technique, data is mapped to a high-dimensional feature space and a linear problem is solved in the feature space, thereby solving the nonlinear problem in the original space.

For example, a graph 50 represents a plot of data with respect to two features x and y. The data plotted as black dots are classified into one class. The data plotted as white dots are classified into another class. However, the black dots and the white dots in the graph 50 are not classifiable with a linear function. That is, the black dots and the white dots in the graph 50 are not linearly separable.

On the other hand, a graph 51 represents a plot of the data with respect to three features x, y, and z. Here, $z = x^2 + y^2$. The black dots and the white dots in the graph 51 are classifiable by a plane. That is, the black dots and the white dots in the graph 51 are linearly separable. In this way, it is possible to solve a nonlinear problem in the original feature space by solving a linear problem in a higher-dimensional feature space than the original feature space.

Note, however, that explicitly handling high-dimensional features may increase the computational cost. To address this, the classical computer 100 performs machine learning computation using a kernel method, without actually mapping data into a high-dimensional feature space.

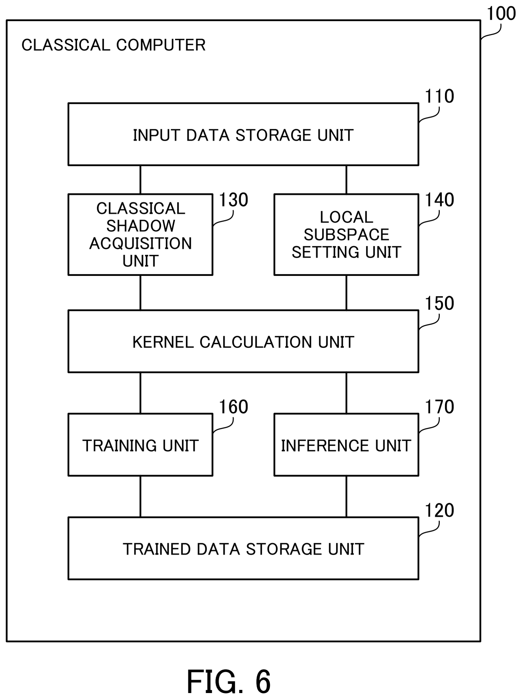

FIG. 6 illustrates an example of functions of the classical computer. The classical computer 100 includes an input data storage unit 110, a trained data storage unit 120, a classical shadow acquisition unit 130, a local subspace setting unit 140, a kernel calculation unit 150, a training unit 160, and an inference unit 170.

The input data storage unit 110 stores various data inputted to the classical computer 100. The data stored in the input data storage unit 110 includes geometric structure information indicating the geometric structure of a space and information for associating each qubit in quantum data with a point in the space. The geometric structure of the space is, for example, a one-dimensional chain, a two-dimensional square lattice, and a three-dimensional cubic lattice, which represent the spatial arrangement of constituent particles such as atoms and molecules in a molecule or a solid. The points in the space associated with the qubits are, for example, lattice points in a lattice such as a one-dimensional chain, a two-dimensional square lattice, or a three-dimensional cubic lattice. The data stored in the input data storage unit 110 also includes classical shadows corresponding to quantum data, acquired using the quantum computer 200.

The trained data storage unit 120 stores trained data obtained by the training unit 160. The trained data includes information on a trained model trained by the training unit 160.

The classical shadow acquisition unit 130 acquires the data of classical shadows corresponding to quantum data using the quantum computer 200 and stores the data in the input data storage unit 110. Each of the plurality of qubits representing the quantum data is associated in advance with a point, i.e., a lattice point in the space indicated by the geometric structure information.

At the time of training, the classical shadow acquisition unit 130 acquires, for each piece of quantum data in a training quantum dataset, the data (training classical shadow) of a classical shadow to be used as training data. The classical shadow acquisition unit 130 also acquires, for each piece of quantum data in a validation quantum dataset, the data (validation classical shadow) of a classical shadow to be used as validation data. For example, in a classification problem, the training data includes a plurality of training classical shadows and the labels of their corresponding classes, to which the training classical shadows belong. The validation data includes a plurality of validation classical shadows and the labels of their corresponding classes, to which the validation classical shadows belong. The classical shadow acquisition unit 130 acquires the training data and the validation data, which include the classical shadows, and stores them in the input data storage unit 110.

At the time of inference, the classical shadow acquisition unit 130 acquires the data of a classical shadow corresponding to quantum data that is the target of prediction.

The local subspace setting unit 140 sets local subspaces in the space indicated by the geometric structure information. As will be described later, the local subspace setting unit 140 adaptively determines the size of the local subspace according to the prediction accuracy of a trained model.

The kernel calculation unit 150 calculates the GLSK for the set local subspaces and each pair of classical shadows. In the training, the kernel calculation unit 150 calculates the GLSK for each pair of training classical shadows among the plurality of training classical shadows.

In the inference, the kernel calculation unit 150 calculates the GLSK for each pair of a classical shadow under prediction and each training classical shadow. As the GLSK, for example, "GLSK defined as the sum" of Formula (4) or "GLSK defined as the product" of Formula (5) is used depending on a problem.

The training unit 160 performs training using the training data by a predetermined machine learning algorithm using the GLSKs calculated for the respective pairs of training classical shadows, to thereby create a trained model to be used for inference. As the machine learning algorithm, for example, an algorithm based on a kernel method, such as a support vector machine, may be used. The training unit 160 performs machine learning to determine the values of parameters in the trained model. The training unit 160 stores information on the trained model including the determined values of the parameters, as trained data in the trained data storage unit 120.

Here, the local subspace setting unit 140 evaluates the prediction accuracy of the trained model using the validation data. The local subspace setting unit 140 updates the size of the local subspace according to the prediction accuracy, and sets the local subspaces again. Then, the local subspace setting unit 140 causes the kernel calculation unit 150 to perform the GLSK calculation for training, and also causes the training unit 160 to perform the training using the training data again. In the case where a validation error is used in evaluating the prediction accuracy, the kernel calculation unit 150 calculates a GLSK value for each pair of a training classical shadow and a validation classical shadow, and calculates, based on the calculated GLSK values, a predicted value such as a label for the validation classical shadow using the trained model.

The cycle of updating the size of the local subspace by the local subspace setting unit 140, calculating the GLSK by the kernel calculation unit 150, and performing the training by the training unit 160 is repeated until the prediction accuracy of the trained model reaches a criterion. When the prediction accuracy of the trained model reaches the criterion, the cycle ends and the creation of the trained model is completed.

The inference unit 170 performs an inference process using the trained model, on the basis of the GLSKs calculated for the respective pairs of a classical shadow under prediction and each training classical shadow, and outputs a predicted value such as a label obtained for the classical shadow under prediction. The inference unit 170 is able to acquire the trained model to be used for the inference process by consulting the trained data storage unit 120.

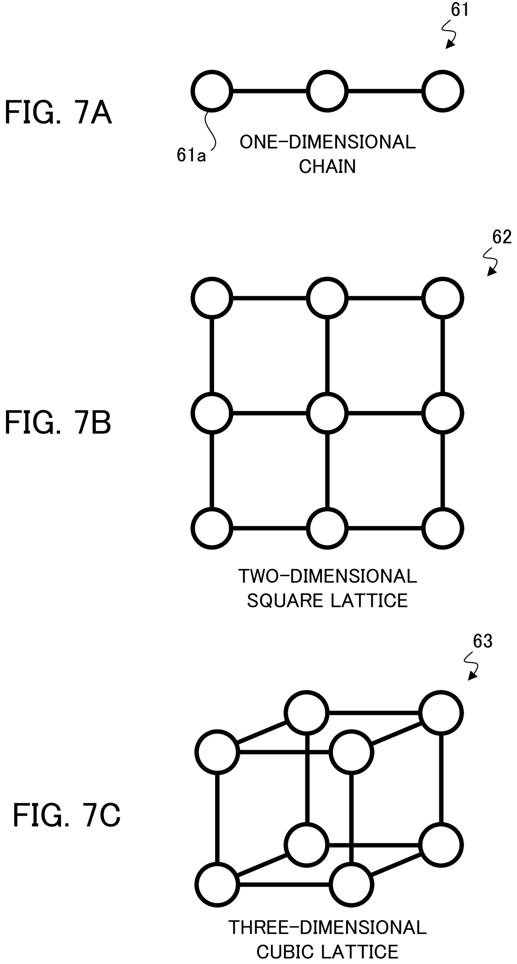

FIGS. 7A to 7C illustrate examples of geometric structures of a space. FIG. 7A illustrates a one-dimensional chain 61. The one-dimensional chain 61 may also be regarded as a one-dimensional lattice. The one-dimensional chain 61 is a geometric structure in which lattice points are periodically arranged on a line segment. In the figure, the points represented as white circles are lattice points. A lattice point 61a is one lattice point included in the one-dimensional chain 61. FIG. 7B illustrates a two-dimensional square lattice 62. The two-dimensional square lattice 62 is a geometric structure in which lattice points are periodically arranged at the vertices of squares. FIG. 7C illustrates a three-dimensional cubic lattice 63. The three-dimensional cubic lattice 63 is a geometric structure in which lattice points are periodically arranged at the vertices of a cube. The geometric structure of the space may also be an L-dimensional lattice, where L is an integer greater than or equal to one. The geometric structure may also be another structure such as a face-centered cubic lattice, a body-centered cubic lattice, or a hexagonal close-packed structure.

Such geometric structures of a space correspond to the arrangement of, for example, constituent particles such as atoms and molecules in a substance, in the space. The geometrical structure in a substance has a significant influence on the properties of the substance. Therefore, by incorporating information on the geometrical structure into a machine learning model, an improvement in the training accuracy is expected. In particular, in many substances, the correlation function decays exponentially as the distance between lattice points in the space increases. Therefore, by focusing on local subsystems in the space, that is, local subspaces, it becomes possible to learn the properties of the substance efficiently.

Note that, in addition to the above example, the functions of the classical computer 100 are applicable to local pattern recognition and local error detection in, for example, images, videos, and quantum data output from a quantum computer.

Geometric structure information indicating the geometric structure of a space to be handled in a problem and information indicating the correspondence between lattice points and qubits are input to the classical computer 100 in advance and are stored in the input data storage unit 110.

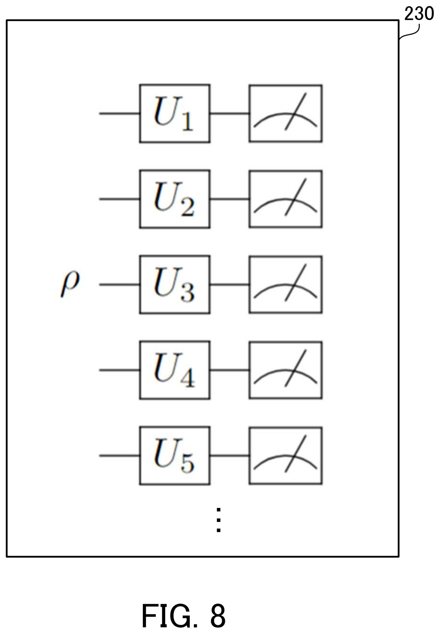

FIG. 8 illustrates an example of a quantum circuit used to acquire a classical shadow. The classical shadow acquisition unit 130 acquires the data of a classical shadow corresponding to quantum data $\rho$ by using the quantum computer 200 as follows. First, the quantum data $\rho$ is prepared on the quantum computer 200. Let n denote the number of qubits in the quantum data.

The quantum computer 200 measures each qubit of the quantum data $\rho$ in a random basis of X, Y, or Z. A quantum circuit 230 is an example of a quantum circuit used to acquire a classical shadow corresponding to the quantum data $\rho$ in the quantum computer 200. The quantum computer 200 applies a quantum gate $U_i$ randomly selected from {I, H, HS†} to each qubit of the quantum data $\rho$. The quantum computer 200 measures all qubits in the Z basis. Let $|b_i\rangle$ denote the state of the i-th qubit projected by the Z-basis measurement. Then, the quantum computer 200 obtains $\sigma_i$ of Formula (2) for each i.

The quantum computer 200 repeats the above operation for the quantum data $\rho$ T times. T is referred to as the number of classical shadow shots. The classical shadow obtained in the t-th measurement is denoted as $\sigma_i^{(t)}$. Then, the quantum computer 200 transmits the data of the classical shadow {$\sigma_i^{(t)}$} (i = 1 to n, t = 1 to T) for the quantum data $\rho$ to the classical computer 100. The classical shadow acquisition unit 130 acquires the data of the classical shadow {$\sigma_i^{(t)}$} received from the classical computer 100.

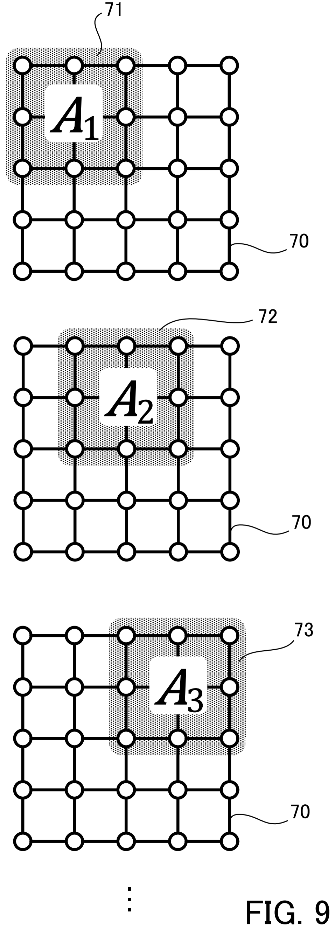

FIG. 9 illustrates examples of local subspaces. The local subspace setting unit 140 sets a set of local subspaces $A_{GL}$ = {$A_1$, $A_2$, $A_3$, ...} based on geometric structure information. As an example, FIG. 9 illustrates local subspaces 71, 72, 73, ... defined for a two-dimensional square lattice 70. The local subspaces 71, 72, 73, ... are examples of local subspaces identified by identifiers $A_1$, $A_2$, $A_3$, ..., respectively. The local subspaces may also be referred to local subsystems.

The local subspace setting unit 140 determines the range and shape, that is, the size of the local subspace according to the characteristics of data to be learned. For example, the shape of the local subspace may be rectangular for the two-dimensional square lattice 70. The local subspace setting unit 140 may adaptively change the range and shape of the local subspace so as to reduce training error and validation error.

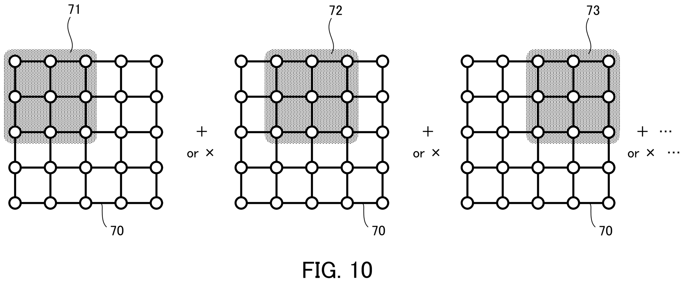

FIG. 10 is a diagram for describing a geometrically local shadow kernel. The kernel calculation unit 150 calculates a shadow kernel for each local subspace with respect to the classical shadows $S_T(\rho)$ = {$\sigma_i^{(t)}$} and $S_T(\tilde{\rho})$ = {$\tilde{\sigma}_i^{(t)}$} corresponding to two pieces of quantum data $\rho$, and $\tilde{\rho}$. For example, the kernel calculation unit 150 calculates a shadow kernel for each of the local subspaces 71, 72, 73, ... in the two-dimensional square lattice 70.

The kernel calculation unit 150 adds the shadow kernels calculated for the respective local subspaces, as presented in Formula (4), thereby calculating "GLSK defined as the sum". Alternatively, the kernel calculation unit 150 multiplies the shadow kernels calculated for the respective local subspaces, as presented in Formula (5), thereby calculating "GLSK defined as the product".

As described earlier, Formulae (4) and (5) include the hyperparameter $\tau_A$ for adjusting the order of the reduced density matrix in each local subspace. Formulae (4) and (5) also include the hyperparameter $\gamma_A$ for adjusting the degree of contribution of the spatial spread in each local subspace. Formula (4) further includes the hyperparameter $C_A$ for adjusting the degree of contribution of each local subspace.

As explained with Formulae (6) and (7), the expressiveness of the feature vector is such that "GLSK defined as the sum < GLSK defined as the product." If it is known in advance that a feature to be learned is able to be expressed by Formula (6), "GLSK defined as the sum" is used, and if not, "GLSK defined as the product" is used. If a problem is able to be solved by using "GLSK defined by sum", then the use of "GLSK defined as the sum" needs less training data than the use of "GLSK defined as the product".

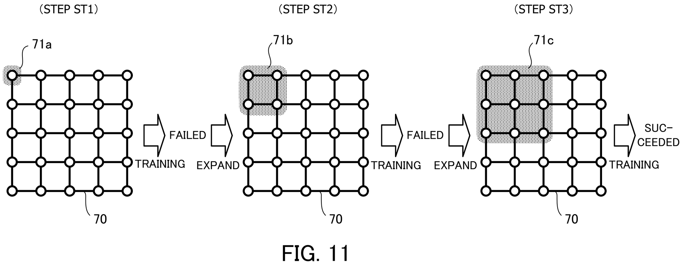

FIG. 11 illustrates an example of adaptive selection for a local subspace. The local subspace setting unit 140 executes an adaptive algorithm that adaptively changes the range or shape of a local subspace so as to reduce the training error or validation error of a trained model obtained for the local subspace having a certain range or shape.

By using classical shadows, it becomes possible to calculate GLSK for an arbitrary local subspace. Therefore, the adaptive algorithm does not increase the quantum computational cost in the quantum computer 200.

An example of the adaptive algorithm may be an algorithm in which, "at the initial stage, the size of the local subspace is set relatively small, and if a validation error exceeds a certain threshold, the size of the local subspace is increased".

For example, for the two-dimensional square lattice 70, the local subspace setting unit 140 determines the size of the local subspace as follows. First, the local subspace setting unit 140 sets the size of the local subspace to the minimum (step ST1). The number of lattice points belonging to the local subspace with the minimum size is one. A local subspace 71a is an example of the local subspace with the minimum size.

As a result of training using the local subspace with the size set in step ST1, the local subspace setting unit 140 detects that the prediction accuracy of the trained model does not satisfy a criterion, that is, that the training has failed. Then, the local subspace setting unit 140 increases the size of the local subspace (step ST2). For example, the local subspace setting unit 140 increases, by one, the number of lattice points along each of the vertical side and the horizontal side of the square local subspace. By doing so, the number of lattice points along each side of the local subspace becomes two. The number of lattice points belonging to the local subspace becomes four. A local subspace 71b is an example of the local subspace having four lattice points.

As a result of training using the local subspace with the size set in step ST2, the local subspace setting unit 140 detects that the training has failed. Then, the local subspace setting unit 140 increases the size of the local subspace (step ST3). For example, the local subspace setting unit 140 increases, by one, the number of lattice points along each of the vertical side and the horizontal side of the local subspace. By doing so, the number of lattice points along each side of the local subspace becomes three. The number of lattice points belonging to the local subspace becomes nine. A local subspace 71c is an example of the local subspace having nine lattice points.

Then, as a result of training using the local subspace with the size set in step ST3, the local subspace setting unit 140 detects that the prediction accuracy of the trained model satisfies the criterion, that is, that the training has succeeded. Then, the local subspace setting unit 140 fixes the size of the local subspace to the current size and terminates the cycle described above.

Here, in changing the size of the local subspace, the local subspace setting unit 140 may increase the number of lattice points along all sides representing the shape of the local subspace, or may increase the number of lattice points along only some of the sides. For example, in the case where it is known that the correlation in a specific direction is relatively strong, the local subspace setting unit 140 may expand the local subspace only in that direction. Alternatively, in changing the size of the local subspace, the local subspace setting unit 140 may adaptively change the shape of the local subspace such that, if an expansion only in a specific direction does not sufficiently improve the prediction accuracy of the trained model, the local subspace is expanded in another direction.

Note that, if the local subspace matches the entire space indicated by the geometric structure information, the GLSK of Formula (4) and the GLSK of Formula (5) is equal to a shadow kernel.

Next, the processing procedure of the quantum computing system 300 will be described. First, the procedure of the training phase will be described.

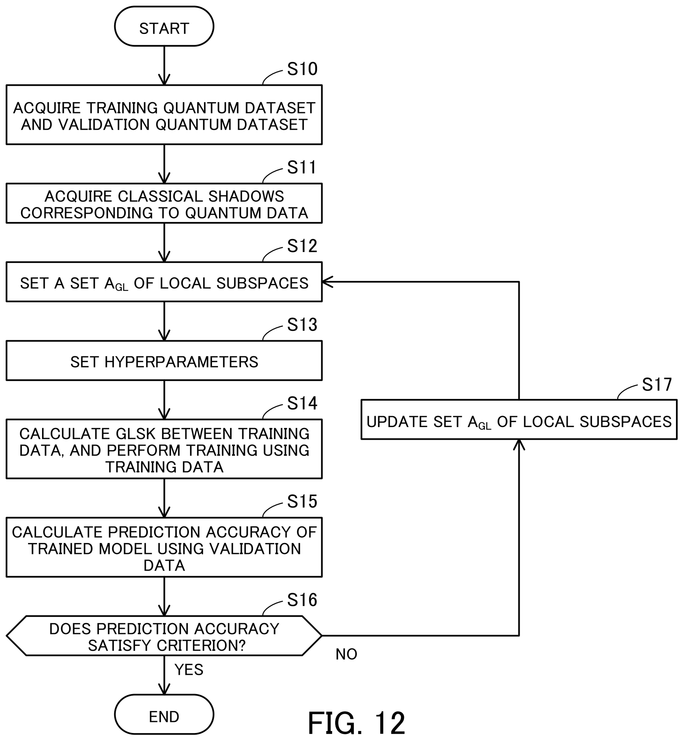

FIG. 12 is a flowchart illustrating an example of a training process.

(S10) The quantum computer 200 acquires a training quantum dataset and a validation quantum dataset.

(S11) The quantum computer 200 acquires classical shadows corresponding to quantum data. Specifically, for the plurality of pieces of training quantum data included in the training quantum dataset, the quantum computer 200 acquires a plurality of training classical shadows to be used as training data. Similarly, for the plurality of pieces of validation quantum data included in the validation quantum dataset, the quantum computer 200 acquires a plurality of validation classical shadows to be used as validation data. The classical shadow acquisition unit 130 acquires the data of the plurality of training classical shadows and the data of the plurality of validation classical shadows from the quantum computer 200.

(S12) The local subspace setting unit 140 sets a set $A_{GL}$ of local subspaces based on geometric structure information stored in the input data storage unit 110. the initial size of the local subspace to be used in the first execution of step 12 is predetermined. The initial size may be a minimum size, for example. In the second and subsequent executions of step 12, the size of the local subspace is increased from the previous one. In this connection, the geometric structure information corresponding to a problem is stored in advance in the input data storage unit 110. Further, information indicating the correspondence between the lattice points in the geometric structure and the qubits in the quantum data is also stored in advance in the input data storage unit 110.

(S13) The kernel calculation unit 150 sets the values of hyperparameters. For example, in the case where Formula (4) is used for GLSK calculation, the kernel calculation unit 150 sets the values of the hyperparameters $\tau_A$, $\gamma_A$, and $C_A$ in Formula (4). In the case where Formula (5) is used for the GLSK calculation, the kernel calculation unit 150 sets the values of the hyperparameters $\tau_A$ and $\gamma_A$ in Formula (5).

(S14) The kernel calculation unit 150 calculates GLSK between the training data, that is, for each pair of training classical shadows. The training unit 160 performs training using the training data, on the basis of the calculated GLSKs. In

EP 4 769 250 A1

the training, various combinations of values may be tried by, for example, grid search, as a combination of the values of the hyperparameters included in the trained model.

(S15) The local subspace setting unit 140 calculates the prediction accuracy of the model that has been trained, i.e., the trained model using the validation data. For example, the local subspace setting unit 140 obtains the prediction results of the trained model for each validation classical shadow using the inference unit 170. The local subspace setting unit 140 checks whether each prediction result matches the label of the corresponding validation classical shadow included in the validation data, that is, whether each prediction result is correct. The local subspace setting unit 140 calculates, as the prediction accuracy, the ratio of validation classical shadows for which the prediction results are determined to be correct to all validation classical shadows.

(S16) The local subspace setting unit 140 determines whether the prediction accuracy satisfies a criterion. If the prediction accuracy satisfies the criterion, the training process is completed. If the prediction accuracy does not satisfy the criterion, the process proceeds to step 17. For example, the local subspace setting unit 140 determines that the prediction accuracy satisfies the criterion, if the prediction accuracy is higher than a threshold. The local subspace setting unit 140 determines that the prediction accuracy does not satisfy the criterion, if the prediction accuracy is lower than or equal to the threshold. The threshold representing the criterion, which the prediction accuracy needs to satisfy, is predetermined.

(S17) The local subspace setting unit 140 updates the set $A_{GL}$ of local subspaces. For example, the local subspace setting unit 140 increases the size of the local subspace. Then, the process proceeds to step 12.

In this connection, alternatively, the local subspace setting unit 140 may obtain, as a prediction error, the ratio of validation classical shadows for which the prediction results are determined to be incorrect to all validation classical shadows in step S15, and then make a determination based on the prediction error in step S16. In this case, the local subspace setting unit 140 determines that the criterion is satisfied if the prediction error is lower than the threshold, and that the criterion is not satisfied if the prediction error is higher than or equal to the threshold.

Here, in the machine learning, data may be divided into 3 types: training data, validation data, and test data. The training data is data from which a machine learning model learns directly. The validation data is data for evaluating the accuracy of the model having learned from the training data and for adjusting hyperparameters and selecting a model. The test data is data used for evaluating the accuracy of the final model after completion of the model training and hyperparameter adjustment using the training data and the validation data. In the accuracy evaluation in steps S16 and S17, the use of the training data may provide inaccurate evaluation due to a possibility of overfitting. Therefore, in the accuracy evaluation in steps S16 and S17, it is preferable to use the validation data rather than the training data. However, the training data may be used for the accuracy evaluation.

Next, the procedure of the inference phase will be described.

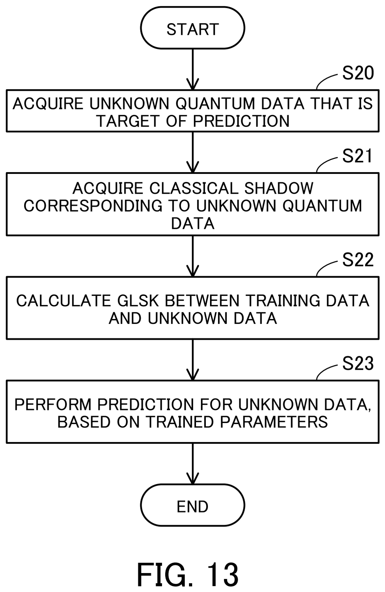

FIG. 13 is a flowchart illustrating an example of an inference process.

(S20) The quantum computer 200 acquires unknown quantum data that is the target of prediction.

(S21) The quantum computer 200 acquires a classical shadow corresponding to the unknown quantum data. The classical shadow acquisition unit 130 acquires the data of the classical shadow corresponding to the unknown quantum data from the quantum computer 200.

(S22) The kernel calculation unit 150 calculates the GLSK between the training data and the unknown data. Specifically, the kernel calculation unit 150 calculates the GLSK for each pair of each training classical shadow and the unknown classical shadow. The same formula as used in step S13 is used to calculate the GLSK in step S22. The size of the local subspace is the size finally determined by the local subspace setting unit 140 in the training phase.

(S23) The inference unit 170 performs prediction for the unknown data, that is, the unknown classical shadow, based on the GLSK calculation results and the trained parameters in the trained model. The inference unit 170 outputs the prediction result. Then, the inference process is completed.

Note that, in step S15 of FIG. 12, the inference unit 170 is also able to obtain a prediction result for the validation data in accordance with the same procedure as in FIG. 13. In this case, the "unknown data" in FIG. 13 may be read as the "validation data".

Next, the process performed by the classical computer 100 will be described with a specific problem as an example.

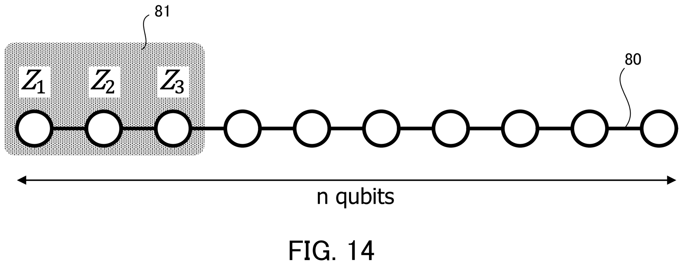

FIG. 14 is a diagram for describing a geometric structure used in an experiment. A geometric structure handled in a problem is a one-dimensional chain 80. The experiment was carried out on the problem of classifying quantum data corresponding to the one-dimensional chain 80 into the following two classes A and B. Class A is a random n-qubit state with $<Z_1Z_2Z_3> = +1$. Class B is a random n-qubit state with $<Z_1Z_2Z_3> = -1$. $<Z_1Z_2Z_3> = +1$ indicates that the expected value of the state for three locally consecutive qubits is +1. $<Z_1Z_2Z_3> = -1$ indicates that the expected value of the state for three locally consecutive qubits is -1.

A local subspace 81 is an example of one local subspace. In this problem, the class of quantum data is determined by the local feature $<Z_1Z_2Z_3>$ of the quantum data. Therefore, it is expected that GLSK reflecting the locality of the space yields excellent results.

The number of pieces of training data used in the experiment is N, and the number of pieces of test data is 200.

13

The training data is the data of training classical shadows. The test data is the data of test classical shadows, and as described above, is not used in the creation of the trained model. Validation data used in the adaptive algorithm is provided separately. A part of the test data may be used as the validation data. The number of classical shadow shots is T = 1000.

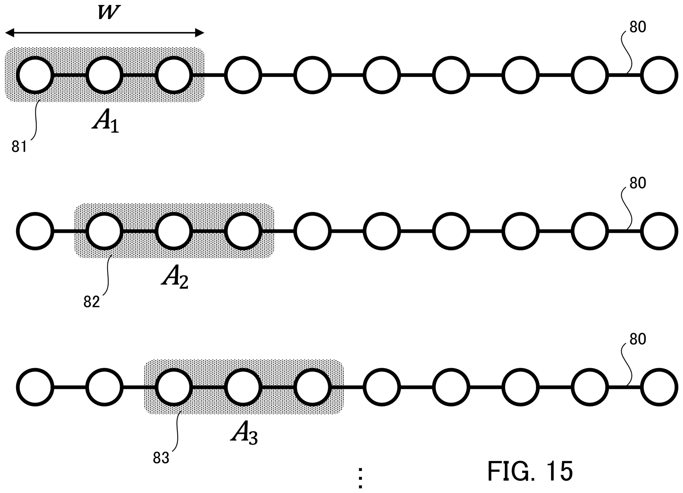

FIG. 15 illustrates example of local subspaces. Local subspaces 81, 82, 83, ... are examples of local subspaces in the one-dimensional chain 80. The local subspaces 81, 82, 83, ... are identified by identifiers $A_1$, $A_2$, $A_3$, ..., respectively. w denotes the size of the local subspace. The i-th local subspace $A_i$ may be expressed as a set of the indices of the lattice points included in the local subspace $A_i$ or a set of the indices of the qubits corresponding to the lattice points included in the local subspace $A_i$. The local subspace $A_i$ is defined by Formula (8) using the size w.

$$A_i = \{i, i+1, \cdots, i+w-1 (\mathrm{mod}\, n)\} \quad (i = 1, 2, \cdots, n) \tag{8}$$

Formula (8) may also be regarded as a set of the indices of the qubits corresponding to the lattice points belonging to $A_i$. As presented in Formula (8), the local subspace setting unit 140 may set the local subspace under a periodic boundary condition, in which the indices cycle from the end index to the first index.

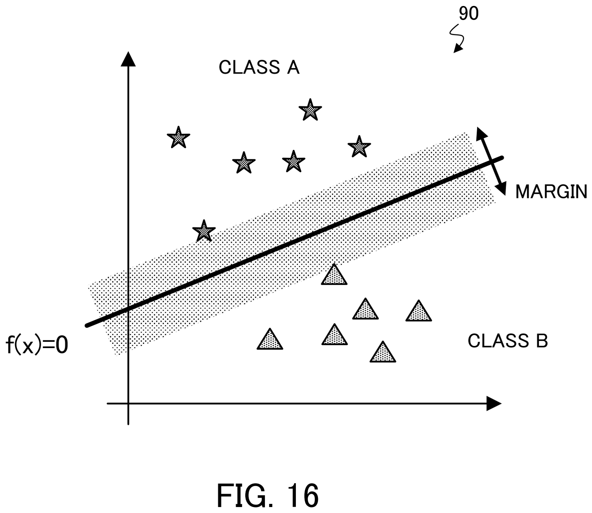

FIG. 16 is a diagram for describing a support vector machine. One example of the machine learning algorithm used by the classical computer 100 is the support vector machine. The support vector machine is a technique for finding a hyperplane that provides classification into classes in a feature space. For example, the scikit-learn library of python® may be used as a support vector machine library.

The classical computer 100 performs classification into classes A and B by means of a hyperplane f(x) = 0 exemplified in a graph 90. The graph 90 represents a feature space. Star-shaped points in the graph 90 represent data classified into class A. Triangular points in the graph 90 represent data classified into class B.

Here, training data is represented as $\{x_i, y_i\}_{i=1}^N$. $x_i$ denotes input data. $y_i$ denotes the label of the class to which $x_i$ belongs. If $x_i$ belongs to class A, $y_i$ = 1. If $x_i$ belongs to class B, $y_i$ = -1.

The distance between the hyperplane and the data closest to the hyperplane is called a margin. The training unit 160 determines the hyperplane so as to maximize the margin. Generally, it is not always possible to classify all data points accurately with the hyperplane. Therefore, the training unit 160 performs the classification while allowing misclassification. A parameter for controlling the tolerance of misclassification is referred to as a regularization parameter and is denoted as C. The greater the regularization parameter C, the less misclassification is allowed.

The margin maximization problem is reformulated as an optimization problem with respect to a variable $\alpha = (\alpha_1, ..., \alpha_N)$, expressed in Formula (9), where $k(x_i, x_j)$ is the kernel function between $x_i$ and $x_j$.

$$\max_\alpha \left[ -\frac{1}{2} \sum_{i,j=1}^N \alpha_i \alpha_j y_i y_j k(x_i, x_j) + \sum_{i=1}^N \alpha_i \right]$$
$$\mathrm{s.t.} \ \sum_{i=1}^N \alpha_i y_i = 0 \ \text{ and } \ 0 \le \alpha_i \le C \ \text{ for } \ \forall i \tag{9}$$

"s.t." in Formula (9) is an abbreviation of "subject to" and indicates a constraint condition.

The hyperplane f(x) = 0 is expressed by Formula (10) below.

$$f(x) = \sum_{i=1}^N \alpha_i y_i k(x_i, x) + b$$
$$\text{where} \ \ b = \frac{1}{|M|} \sum_{i \in M} \left( y_i - \sum_{j=1}^N \alpha_j y_j k(x_j, x_i) \right) \tag{10}$$

M is a set of indices defined in Formula (11). |M| denotes the number of indices included in M.

$$M = \{i \in [N] \,|\, 0 < \alpha_i < C\}, \ \ [N] = 1, 2, \cdots, N \tag{11}$$

In the case of predicting the class into which unknown data x* is to be classified, the inference unit 170 substitutes x* into Formula (10). The inference unit 170 predicts class A if f(x*) > 0, and predicts class B if f(x*) < 0.

The following presents a comparative example in which the existing shadow kernel expressed by Formula (1) is used as the kernel function of Formula (9). In the experiment, the prediction accuracy of a trained model obtained with the technique of the comparative example was compared with the prediction accuracy of a trained model obtained with the technique in which GLSK is used as the kernel function of Formula (9). "GLSK defined as the sum" expressed by Formula (4) was used as the GLSK.

The value of each parameter is as follows. The regularization parameter is C = 1. The hyperparameters of the shadow kernel in Formula (1) in the comparative example are $\tau = \gamma = 1$. The hyperparameters of the GLSK in Formula (4) are $\tau_A = \gamma_A = C_A = 1$.

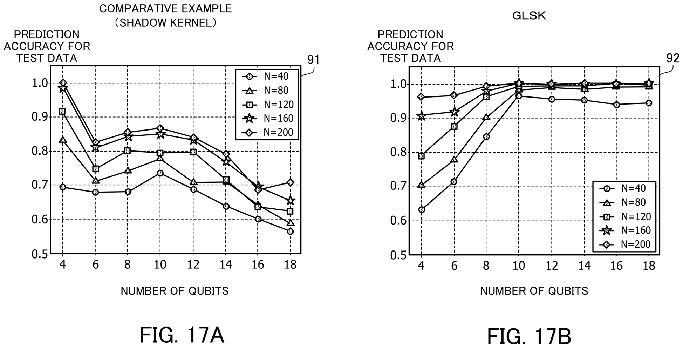

FIGS. 17A and 17B illustrate example results of prediction accuracy. FIG. 17A illustrates a graph 91 corresponding to the comparative example (shadow kernel). FIG. 17B illustrates a graph 92 corresponding to the case where GLSK is used. In the graphs 91 and 92, the horizontal axis represents the number of qubits n in quantum data, and the vertical axis represents the prediction accuracy of a trained model for test data. The classical computer 100 calculates the prediction accuracy (test accuracy) of the classification for the test data while changing the number of qubits in the problem. The size w of the local subspace is fixed to w = 3.

According to the graphs 91 and 92, in the comparative example, the prediction accuracy of the classification decreases as the number of qubits increases, whereas in the technique using GLSK, the prediction accuracy increases as the number of qubits increases. The graphs 91 and 92 provide a series corresponding to each case of the number of pieces of training data N = 40, 80, 120, 160, and 200. It is confirmed from the graphs 91 and 92 that the use of GLSK achieves high classification performance even when the number of pieces of training data is small.

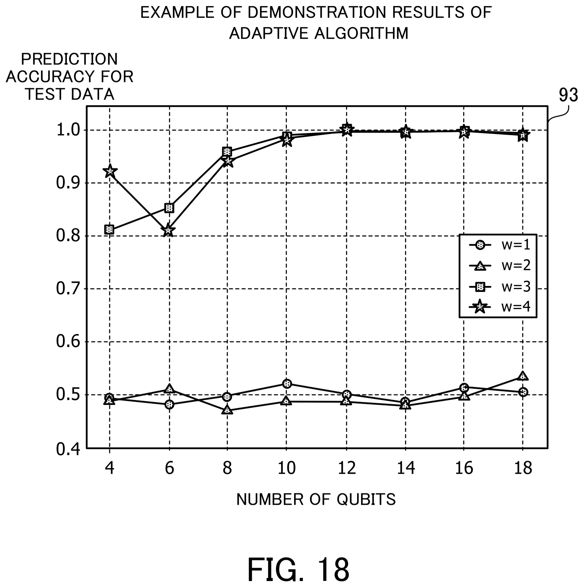

FIG. 18 illustrates an example of demonstration results of the adaptive algorithm. A graph 93 provides the prediction accuracy of a trained model based on the technique using GLSK in the case where the size w of the local subspace is set to w = 1, 2, 3 and 4. In the graph 93, the horizontal axis represents the number of qubits n, and the vertical axis represents the prediction accuracy (test accuracy) of classification for test data. The graph 93 provides a series corresponding to each case of w = 1, 2, 3 and 4.

It is confirmed from the graph 93 that the prediction accuracy is approximately 50% in the case where the size w of the local subspace is two or less, which indicates that the training is not performed successfully. On the other hand, the prediction accuracy increases sharply in the case where w is three or greater. Thus, the classical computer 100 is able to determine an appropriate size w by increasing w, starting from w = 1, until the prediction accuracy exceeds a certain threshold.

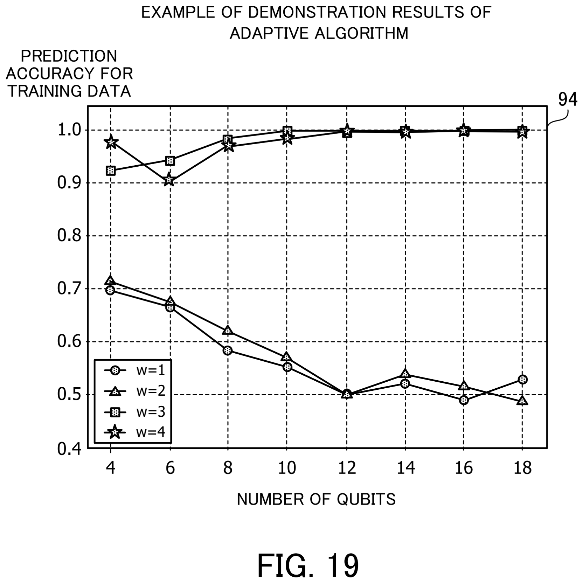

FIG. 19 illustrates an example of demonstration results of the adaptive algorithm. A graph 94 provides the prediction accuracy of a trained model based on the technique using GLSK in the case where the size w of the local subspace is set to w = 1, 2, 3, and 4. In the graph 94, the horizontal axis represents the number of qubits n, and the vertical axis represents the prediction accuracy (training accuracy) of classification for training data. The graph 94 provides a series corresponding to each case of w = 1, 2, 3, and 4.

It is confirmed from the graph 94 that the prediction accuracy for the training data increases sharply in the case where the size w of the local subspace is three or more, as in the prediction accuracy for the test data. On the other hand, for example, in the case where the number of qubits is n = 4 and the size is w = 1, 2, the prediction accuracy for the training data is approximately 70%, which is higher than the prediction accuracy (approximately 50%) for the test data obtained with n = 4 and w = 1, 2 in the graph 93. This indicates that overfitting occurs in the case where the number of qubits n is small. If the prediction accuracy is evaluated using the training data in this way, there is a possibility that the size w of the local subspace is not appropriately determined due to the overfitting. Therefore, in order to determine the size of the local subspace with high reliability, the classical computer 100 preferably uses validation data different from the training data.

According to the classical computer 100 of the second embodiment, the use of a kernel function reflecting the geometric structure of a space and its locality makes it possible to efficiently learn the local properties of quantum data in a problem such as a material or a substance, with a relatively small number of pieces of training data.

Specifically, the classical computer 100 calculates a shadow kernel over a local subspace in a geometric structure, and adds or multiplies the shadow kernels while shifting the local subspace across the entire space. For example, in geometric structures such as materials and substances, the correlations between lattice points that are far apart are weak. Therefore, by limiting the calculation of a shadow kernel to a local region, the classical computer 100 is able to avoid handling information unneeded for the training, that is, information on spatially non-local features. By focusing on features significant for the training, the classical computer 100 is able to reduce the number of pieces of training data needed for generalization. The classical computer 100 is also able to improve the training accuracy.

Further, an appropriate size of the local subspace is sometimes not known in advance. The classical computer 100 is able to appropriately determine the size of the local subspace by adaptively setting the local subspace so that the training error and the validation error are below a predetermined criterion. Having the training error or the validation error below the criterion corresponds to having the prediction accuracy for the training data or the prediction accuracy for the validation data higher than a predetermined criterion.

Although the shadow kernel is exemplified as the kernel function used for the local subspace, the kernel function is not limited to the shadow kernel. For example, the kernel function used for the local subspace may be the above-mentioned fidelity kernel or projected kernel.

As described above, the classical computer 100 performs the following process, for example.

The processor 101 acquires the data of a first classical shadow and the data of a second classical shadow. The first classical shadow is a classical approximation corresponding to first quantum data represented by a plurality of qubits, and includes a plurality of first data elements corresponding to the plurality of qubits. The second classical shadow is a classical approximation corresponding to second quantum data represented by the plurality of qubits, and includes a plurality of second data elements corresponding to the plurality of qubits. The processor 101 acquires geometric structure information indicating the geometric structure of a space including a plurality of lattice points associated with the plurality of qubits. The processor 101 sets a plurality of local subspaces each including a set of local lattice points among the plurality of lattice points included in the space, based on the geometric structure information. The processor 101 calculates, for each of the plurality of local subspaces, a value of a first kernel function based on, among the plurality of first data elements and the plurality of second data elements, the first data elements and the second data elements corresponding to the lattice points belonging to that local subspace. The processor 101 calculates a value of a second kernel function corresponding to the first classical shadow and the second classical shadow, based on the values of the first kernel function corresponding to the plurality of local subspaces. With this process, the classical computer 100 is able to reduce the number of pieces of training data used for machine learning. The first kernel function may be, for example, a shadow kernel, a fidelity kernel or a projected kernel.

The second kernel function is a function that takes the sum or product of the plurality of values of the first kernel function. The GLSK in each Formula (4) and (5) is an example of the second kernel function. "GLSK defined as the sum" in Formula (4) is an example of a function that takes the sum of the plurality of values of the first kernel function. "GLSK defined as the product" in Formula (5) is an example of a function that takes the product of the plurality of values of the first kernel function. Thus, the classical computer 100 is able to appropriately calculate the value of the second kernel function.

The processor 101 calculates a value of the second kernel function for each pair of classical shadows among a plurality of classical shadows corresponding to a plurality of pieces of quantum data including the first quantum data and the second quantum data. Using the values of the second kernel function calculated for the respective pairs of classical shadows, the processor 101 performs machine learning of a model that outputs a predicted value in response to an input of a classical shadow. The processor 101 changes the size of the local subspace based on the prediction accuracy of the model. By doing so, the classical computer 100 is able to appropriately determine the size of the local subspace.

More specifically, if the prediction accuracy of the model is lower than a threshold, the processor 101 increases the size of the local subspace. The processor 101 then performs the machine learning of the model based on the local subspace with the changed size. In this way, the classical computer 100 is able to set an appropriate size for the local subspace and to perform the machine learning. With this approach, the prediction accuracy of the model created by the machine learning is improved.

The geometric structure of the space indicated by the geometric structure information is, for example, an L-dimensional lattice (where L is an integer greater than or equal to one). The plurality of lattice points in the space are, for example, lattice points in the L-dimensional lattice. The classical computer 100 is particularly useful when handling a geometric structure represented by an L-dimensional lattice, as in problems related to substances and materials.

Note that, in addition to the above example, the functions of the classical computer 100 are applicable to local pattern recognition and local error detection in, for example, images, videos, and quantum data output from the quantum computer 200.

In one aspect, it is possible to reduce the number of pieces of training data to be used for machine learning.

**Claims**

1. A computer program that causes a computer to perform a process comprising:

   acquiring data of a first classical shadow corresponding to first quantum data represented by a plurality of qubits, data of a second classical shadow corresponding to second quantum data represented by the plurality of qubits, and geometric structure information indicating a geometric structure (30) of a space including a plurality of lattice points associated with the plurality of qubits, the first classical shadow including a plurality of first data elements corresponding to the plurality of quits, the second classical shadow including a plurality of second data elements corresponding to the plurality of qubits;
   setting, based on the geometric structure information, a plurality of local subspaces (31, 32, 33) each including a set of at least one local lattice point among the plurality of lattice points in the space;
   calculating, for each of the plurality of local subspaces, a value of a first kernel function based on, among the plurality of first data elements and the plurality of second data elements, a first data element and a second data element corresponding to the at least one lattice point belonging to said each of the plurality of local subspaces; and

calculating a value of a second kernel function corresponding to the first classical shadow and the second classical shadow, based on a plurality of values of the first kernel function corresponding to the plurality of local subspaces.

2. The computer program according to claim 1, wherein the second kernel function takes a sum or product of the plurality of values of the first kernel function.

3. The computer program according to claim 1 or claim 2, wherein the process includes

calculating the value of the second kernel function for each pair of classical shadows among a plurality of classical shadows corresponding to a plurality of quantum data including the first quantum data and the second quantum data,

performing machine learning of a model that outputs a predicted value in response to an input of a classical shadow, using the value of the second kernel function calculated for said each pair of classical shadows, and changing a size of the local subspaces based on an accuracy of the predicted value output by the model.

4. The computer program according to claim 3, wherein

the changing of the size includes increasing the size in response to the accuracy of the predicted value output by the model being lower than a threshold, and

the machine learning of the model is performed based on the local subspaces with the changed size.

5. The computer program according to any preceding claim, wherein

the geometric structure is an L-dimensional lattice, the L being an integer greater than or equal to one, and the plurality of lattice points are lattice points in the L-dimensional lattice.

6. A calculation method executed by a computer, the calculation method comprising:

acquiring data of a first classical shadow corresponding to first quantum data represented by a plurality of qubits, data of a second classical shadow corresponding to second quantum data represented by the plurality of qubits, and geometric structure information indicating a geometric structure (30) of a space including a plurality of lattice points associated with the plurality of qubits, the first classical shadow including a plurality of first data elements corresponding to the plurality of quits, the second classical shadow including a plurality of second data elements corresponding to the plurality of qubits;

setting, based on the geometric structure information, a plurality of local subspaces (31, 32, 33) each including a set of at least one local lattice point among the plurality of lattice points in the space;

calculating, for each of the plurality of local subspaces, a value of a first kernel function based on, among the plurality of first data elements and the plurality of second data elements, a first data element and a second data element corresponding to the at least one lattice point belonging to said each of the plurality of local subspaces; and

calculating a value of a second kernel function corresponding to the first classical shadow and the second classical shadow, based on a plurality of values of the first kernel function corresponding to the plurality of local subspaces.

7. An information processing apparatus comprising:

storage means (11) for storing data of a first classical shadow corresponding to first quantum data represented by a plurality of qubits, data of a second classical shadow corresponding to second quantum data represented by the plurality of qubits, and geometric structure information indicating a geometric structure (30) of a space including a plurality of lattice points associated with the plurality of qubits, the first classical shadow including a plurality of first data elements corresponding to the plurality of quits, the second classical shadow including a plurality of second data elements corresponding to the plurality of qubits; and processing means (12) for

setting, based on the geometric structure information, a plurality of local subspaces (31, 32, 33) each including a set of at least one local lattice point among the plurality of lattice points in the space,

calculating, for each of the plurality of local subspaces, a value of a first kernel function based on, among the plurality of first data elements and the plurality of second data elements, a first data element and a second data element corresponding to the at least one lattice point belonging to said each of the plurality of local subspaces, and

calculating a value of a second kernel function corresponding to the first classical shadow and the second classical shadow, based on a plurality of values of the first kernel function corresponding to the plurality of local subspaces.

FIG. 1

FIG. 2

TERMINAL
DEVICE
401

TERMINAL
DEVICE
402

· · ·

40

NETWORK

300

QUANTUM
COMPUTING SYSTEM

200

100

QUANTUM
COMPUTER

CLASSICAL
COMPUTER

FIG. 3

FIG. 4

FIG. 5

FIG. 6

FIG. 7A

61

61a

ONE-DIMENSIONAL
CHAIN

FIG. 7B

62

TWO-DIMENSIONAL
SQUARE LATTICE

FIG. 7C

63

THREE-DIMENSIONAL
CUBIC LATTICE

FIG. 8

FIG. 9

FIG. 10

FIG. 11

START

ACQUIRE TRAINING QUANTUM DATASET
AND VALIDATION QUANTUM DATASET — S10

ACQUIRE CLASSICAL SHADOWS
CORRESPONDING TO QUANTUM DATA — S11

SET A SET $A_{GL}$ OF LOCAL SUBSPACES — S12

SET HYPERPARAMETERS — S13

CALCULATE GLSK BETWEEN TRAINING
DATA, AND PERFORM TRAINING USING
TRAINING DATA — S14

CALCULATE PREDICTION ACCURACY OF
TRAINED MODEL USING VALIDATION
DATA — S15

DOES PREDICTION ACCURACY
SATISFY CRITERION? — S16

NO

UPDATE SET $A_{GL}$ OF LOCAL SUBSPACES — S17

YES

END

FIG. 12

```
              ┌─────────────┐
              │    START    │
              └─────────────┘
                     │
                     ▼              S20
┌───────────────────────────────────────┐
│ ACQUIRE UNKNOWN QUANTUM DATA THAT IS   │
│         TARGET OF PREDICTION           │
└───────────────────────────────────────┘
                     │
                     ▼              S21
┌───────────────────────────────────────┐
│        ACQUIRE CLASSICAL SHADOW        │
│  CORRESPONDING TO UNKNOWN QUANTUM      │
│                 DATA                   │
└───────────────────────────────────────┘
                     │
                     ▼              S22
┌───────────────────────────────────────┐
│ CALCULATE GLSK BETWEEN TRAINING DATA   │
│          AND UNKNOWN DATA              │
└───────────────────────────────────────┘
                     │
                     ▼              S23
┌───────────────────────────────────────┐
│ PERFORM PREDICTION FOR UNKNOWN DATA,   │
│      BASED ON TRAINED PARAMETERS       │
└───────────────────────────────────────┘
                     │
                     ▼
              ┌─────────────┐
              │     END     │
              └─────────────┘
```

# FIG. 13

FIG. 14

FIG. 15

FIG. 16

COMPARATIVE EXAMPLE
（SHADOW KERNEL）

PREDICTION
ACCURACY FOR
TEST DATA

91

- N=40
- N=80
- N=120
- N=160
- N=200

NUMBER OF QUBITS

## FIG. 17A

GLSK

PREDICTION
ACCURACY FOR
TEST DATA

92

- N=40
- N=80
- N=120
- N=160
- N=200

NUMBER OF QUBITS

## FIG. 17B

EXAMPLE OF DEMONSTRATION RESULTS OF
ADAPTIVE ALGORITHM

FIG. 18

EXAMPLE OF DEMONSTRATION RESULTS OF
ADAPTIVE ALGORITHM

FIG. 19

| | Europäisches Patentamt European Patent Office Office européen des brevets | **EUROPEAN SEARCH REPORT** | **Application Number** EP 25 21 5377 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2021 364 446 A9 (GOOGLE LLC [US]) 24 October 2024 (2024-10-24) * claims 1, 2, 5 * ----- | 1-7 | INV. G06N20/00 G06N10/60 |
| | | | |
| | | | TECHNICAL FIELDS SEARCHED (IPC) |
| | | | G06N G06J |

The present search report has been drawn up for all claims

| Place of search | Date of completion of the search | Examiner |
|---|---|---|
| The Hague | 31 March 2026 | Theissing, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 5377

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | Publication date | Patent family member(s) | | Publication date |
|---|---|---|---|---|
| AU 2021364446 A9 | 24-10-2024 | AU | 2021364446 A1 | 25-05-2023 |
| | | AU | 2024201618 A1 | 28-03-2024 |
| | | CA | 3196122 A1 | 28-04-2022 |
| | | CN | 116368502 A | 30-06-2023 |
| | | EP | 4211626 A1 | 19-07-2023 |
| | | JP | 7502560 B2 | 18-06-2024 |
| | | JP | 7684480 B2 | 27-05-2025 |
| | | JP | 2023546590 A | 06-11-2023 |
| | | JP | 2024125311 A | 18-09-2024 |
| | | KR | 20230085175 A | 13-06-2023 |
| | | US | 2022121998 A1 | 21-04-2022 |
| | | WO | 2022086918 A1 | 28-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20240046137
- US 20230385674
- WO 2023278462 A
- WO 2022086918 A
- WO 122040504 A

**Non-patent literature cited in the description**

- **MARIA SCHULD**. Quantum Machine Learning in Feature Hilbert Spaces. *Physical Review Letters*
- **YUNCHAO LIU**. A rigorous and robust quantum speed-up in supervised machine learning. *Nature Physics*, 12 July 2021, vol. 17, 1013-1017
- **HSIN-YUAN HUANG**. Power of data in quantum machine learning. *Nature Communications*, 11 May 2021, vol. 12 (2631)
- **HSIN-YUAN HUANG**. Provably efficient machine learning for quantum many-body problems. *Science*, 23 September 2022, vol. 377 (6613)